# EUROPÄISCHE PATENTSCHRIFT

(11) **EP 3 165 433 B1**
(45) Veröffentlichungstag und Bekanntmachung des Hinweises auf die Patenterteilung: **14.03.2018**
(21) Anmeldenummer: 16196325.1
(22) Anmeldetag: 28.10.2016
(51) Int. Cl.: B62D 59/04

(54) **RANGIERANTRIEB FÜR EINEN ANHÄNGER**
MANOEUVRING DRIVE FOR A TRAILER
ENTRAÎNEMENT DE RANGEMENT POUR REMORQUE

(30) Priorität: 05.11.2015 DE 202015105911 U
(43) Veröffentlichungstag der Anmeldung: 10.05.2017
(73) Patentinhaber: Truma Gerätetechnik GmbH & Co. KG, 85640 Putzbrunn (DE)
(72) Erfinder: Gumpp, Daniel, 86415 Mering (DE); Maack, Frank, 84549 München (DE); Müller, Jochen, 86836 Untermeitingen (DE); Müller, Jörg, 85658 Egmating (DE); Wickelmaier, Peter, 81671 München (DE); Möhring, Mario, 82054 Sauerlach (DE)
(74) Vertreter: Prinz & Partner mbB

(56) Entgegenhaltungen:
- EP-A2- 2 669 155
- EP-A2- 2 918 483

## Beschreibung

Die Erfindung betrifft einen Rangierantrieb für einen Anhänger, mit einem Elektromotor, einer Antriebsrolle und einem Getriebe, das den Elektromotor mit der Antriebsrolle koppelt. Das Dokument EP 2 669 155 A2 offenbart einen gattungsgemäßen Rangierantrieb. Bei dem Anhänger kann es sich beispielsweise um einen Wohnwagen, einen Bootsanhänger, einen Pferdeanhänger, einen Marktanhänger oder ähnliches handeln. Dieser wird üblicherweise von einer Zugmaschine gezogen. Bei einem Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und dann in die endgültige Position rangiert. Hierfür kann der Rangierantrieb verwendet werden, der ein Hilfsantrieb ist, mit dem der Anhänger dann bewegt werden kann, wenn er nicht an die Zugmaschine angekoppelt ist.

Wenn sich der Rangierantrieb in einem betriebsbereiten Zustand befindet, greift die Antriebsrolle an der Lauffläche des Rades an, dem der entsprechende Rangierantrieb zugeordnet ist. Der Elektromotor wird dann je nach gewünschter Fahrtrichtung des Anhängers in der einen oder der anderen Richtung betrieben, sodass über das Getriebe die Antriebsrolle und von dieser das Rad des Anhängers gedreht wird.

Als Getriebe zwischen der Antriebsrolle und dem Elektromotor kann ein Schneckenradgetriebe verwendet werden. Der Vorteil eines Schneckenradgetriebes besteht darin, dass es selbsthemmend ist. Somit bleibt der Anhänger, auch wenn er mittels des Rangierantriebs auf geneigtem Untergrund rangiert wird, trotz der Hangabtriebskraft von alleine stehen, wenn der Elektromotor ausgeschaltet wird; es ist keine separate Bremseinrichtung notwendig. Der Nachteil eines Schneckenradgetriebes besteht allerdings im recht geringen Wirkungsgrad.

Als Getriebe zwischen der Antriebsrolle und dem Elektromotor sind auch Stirnrad- oder Kegelradgetriebe bekannt. Diese zeichnen sich durch einen deutlich höheren Wirkungsgrad aus. Allerdings lässt sich mit einem Stirnradgetriebe keine Selbsthemmung erzielen, sodass eine Bremseinrichtung erforderlich ist.

Die Aufgabe der Erfindung besteht darin, die bekannten Rangierantriebe dahingehend zu verbessern, dass sich ein höherer Wirkungsgrad bei kleinem Bauraum ergibt.

Zur Lösung dieser Aufgabe ist erfindungsgemäß bei einem Rangierantrieb der eingangs genannten Art vorgesehen, dass das Getriebe ein selbsthemmendes Hypoidgetriebe ist. Durch die gekreuzte Anordnung der Eingangs- und der Ausgangswelle ergeben sich Vorteile hinsichtlich des notwendigen Bauraums, da der Antriebsmotor optimal am Rangierantrieb angeordnet werden kann und sich eine geringe Störkontur ergibt. Mit einem Hypoidgetriebe lässt sich außerdem ein hoher Wirkungsgrad erzielen, der in der Größenordnung von 80% liegt. Gleichzeitig lässt sich die Verzahnung so ausgestalten, dass das Getriebe selbsthemmend ist. Somit kann auf eine Bremseinrichtung verzichtet werden. Aufgrund des im Vergleich zu einem Schneckenradgetriebe sehr viel höheren Wirkungsgrades kann bei gleicher Antriebsleistung des Rangierantriebs ein kleinerer Elektromotor verwendet werden. Dies verringert das Gewicht und die Kosten, was die tendenziell etwas höheren Kosten für die Hypoidverzahnung mehr als kompensiert. Als weitere Vorteile ergeben sich unter anderem, dass kleiner dimensionierte Kabel für die Stromversorgung des Antriebsmotors verwendet können. Weitere positive Effekte sind, dass aufgrund des verbesserten Wirkungsgrades die Steuerung schwächer dimensioniert werden kann und eine Batterie mit geringerer Kapazität ausreichend ist.

Weitere Spezialformen des selbsthemmenden Hypoidgetriebe sind auch bekannt als Spiroidgetriebe / SRH-Getriebe.

Der Versatz der Drehachse des Ritzels des Hypoidgetriebes relativ zur Drehachse des Tellerrades des Hypoidgetriebes beträgt vorzugsweise in der Größenordnung von 20% bis 80% des Radius der Verzahnung des Tellerrades. Der jeweils gewählte Versatz kann dabei im Hinblick auf den zur Verfügung stehenden Bauraum und die Eigenschaften des Getriebes geeignet gewählt werden. Insbesondere kann eine funktions- und gestaltoptimierte Hüllkurve des Rangierantriebs erhalten werden.

Gemäß einer Ausgestaltung der Erfindung ist eine Ritzelwelle vorgesehen, auf der das Ritzel angeordnet ist und die beiderseits des Ritzels gelagert ist. Durch die Lagerung des Ritzels auf beiden Seiten werden Kippmomente vermieden.

Gemäß einer alternativen Ausgestaltung ist vorgesehen, dass das Ritzel einseitig gelagert ist. Dies kann im Hinblick auf ein kompaktes Gehäuse des Getriebes vorteilhaft sein.

Die Untersetzung zwischen dem Ritzel und dem Tellerrad kann in einem großen Bereich abhängig von den jeweiligen Anforderungen gewählt werden. Vorteilhaft haben sich Werte oberhalb von 8:1 herausgestellt, insbesondere oberhalb von 12:1, 16:1 und 20:1.

Vorzugsweise ist ein weiteres Untersetzungsgetriebe zwischen Elektromotor und Antriebsrolle vorhanden, die ein Untersetzungsverhältnis im Bereich von 5:1 von 25:1 hat. Das weitere Untersetzungsgetriebe ermöglicht es, einen schnelllaufenden Elektromotor mit Drehzahlen im Bereich von über 6.000 U/min bis zu 10.000 U/min zu verwenden.

Abhängig vom jeweiligen Anwendungsfall kann das Untersetzungsgetriebe einstufig oder mehrstufig sein. Dabei kann je nach konkretem Anwendungsfall das weitere Untersetzungsgetriebe als Stirnradgetriebe oder auch als Planetenradgetriebe ausgeführt sein.

Gemäß einer bevorzugten Ausführungsform der Erfindung ist das Sonnenrad des Planetenradgetriebes mit dem Tellerrad gekoppelt, das Hohlrad ist feststehend und der Planetenradträger ist mit einer Antriebsrollenwelle gekoppelt. Hierdurch ergibt sich ein besonders kompakter Aufbau.

Die Erfindung wird nachfolgend anhand verschiedener Ausführungsformen beschrieben, die in den beigefügten Zeichnungen dargestellt sind. In diesen zeigen:
- Figur 1 schematisch einen Anhänger mit Rangierantrieb;
- die Figuren 2a bis 2d in einer schematischen Schnittansicht, einer perspektivischen Ansicht, einer Seitenansicht und einer Draufsicht einen Rangierantrieb gemäß einer ersten Ausführungsform;
- Figur 3 in einer perspektivischen Ansicht eine Variante des Getriebes, das beim Rangierantrieb gemäß der ersten Ausführungsform verwendet werden kann;
- Figur 4 in einer perspektivischen Ansicht, einer Seitenansicht und einer Draufsicht einen Rangierantrieb gemäß einer zweiten Ausführungsform; und
- Figur 5 in Ansichten entsprechend denjenigen von Figur 4 einen Rangierantrieb gemäß einer dritten Ausführungsform.

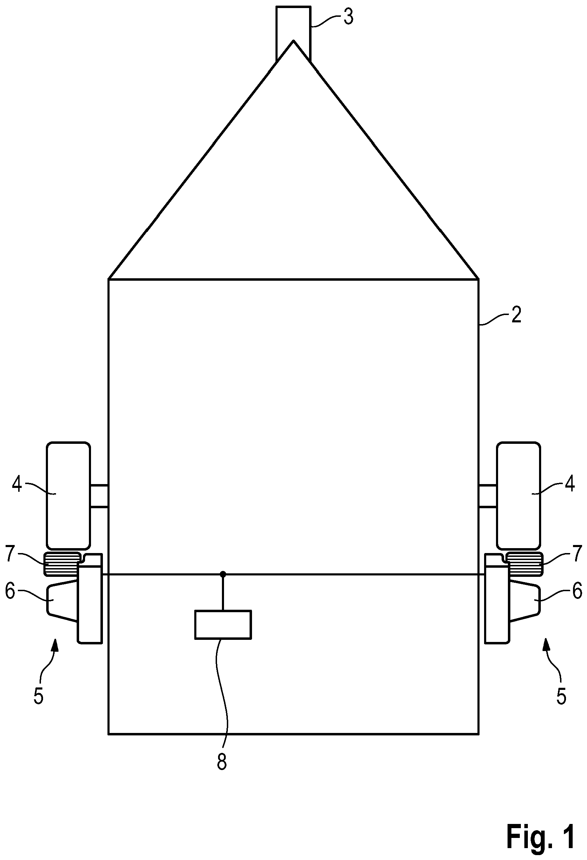

In Figur 1 ist schematisch ein Anhänger 2 gezeigt, beispielsweise ein Wohnwagen. Der Anhänger 2 weist eine Deichsel 3 auf, mit der er an einen Zugwagen angekoppelt werden kann, sowie zwei Räder 4.

Jedem der Räder 4 ist ein Rangierantrieb 5 zugeordnet, der einen Elektromotor 6 und eine Antriebsrolle 7 aufweist. Zur Energieversorgung des Elektromotors 6 ist eine Batterie 8 vorgesehen.

Jeder Rangierantrieb 5 kann mittels eines hier nicht gezeigten Andruckmechanismus zwischen einer Ausgangsposition, in der die Antriebsrolle 7 sich im Abstand von der Lauffläche des Rades 4 befindet, und einer aktivierten Stellung verstellt werden, in der die Antriebsrolle 7 gegen die Lauffläche des Rades 4 so gepresst wird, dass eine Drehung der Antriebsrolle 7 auf das Rad 4 übertragen wird.

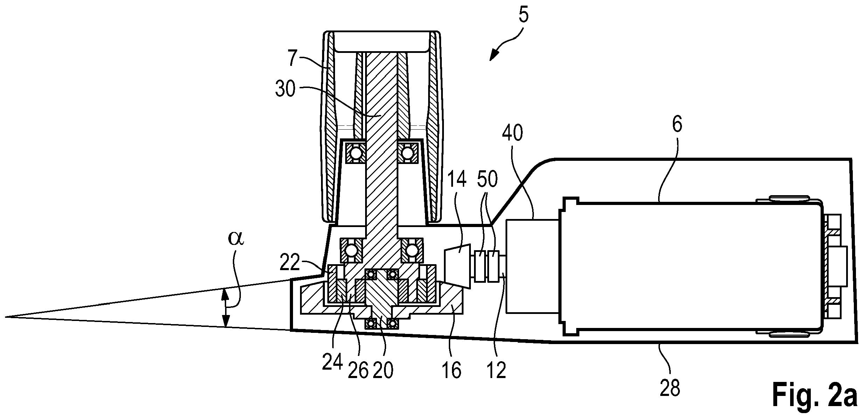

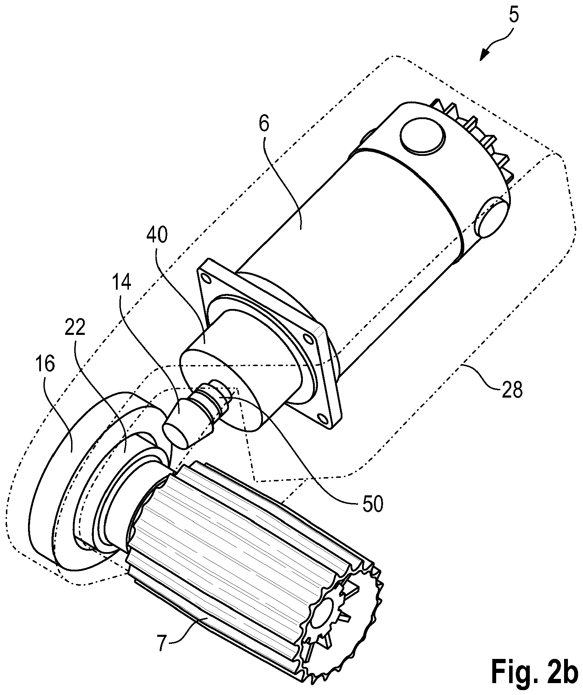

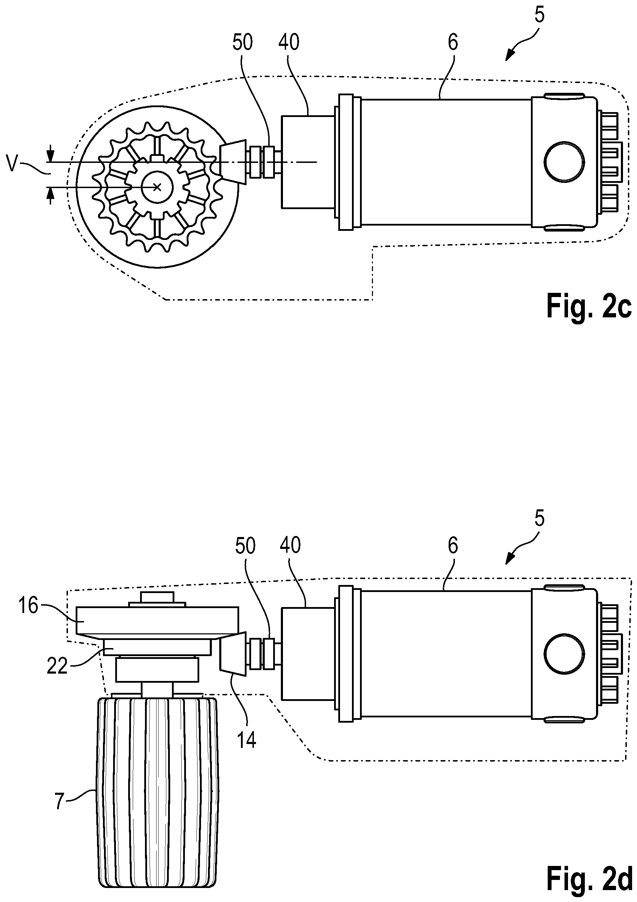

In Figur 2 ist ein Rangierantrieb gemäß einer ersten Ausführungsform gezeigt.

Der Elektromotor 6 weist eine Motorwelle 12 auf, die mit einem Ritzel 14 gekoppelt ist. Das Ritzel 14 greift in ein Tellerrad 16 ein.

Wie in Figur 2c zu sehen ist, ist die Drehachse des Ritzels 14 relativ zur Drehachse des Tellerrades 16 um einen Versatz V versetzt. Die Drehachsen schneiden sich also nicht; sie sind windschief.

Der Versatz V liegt in der Größenordnung von 20 bis 80% des Radius des Tellerrades 16.

Zwischen dem vom Ritzel 14 und dem Tellerrad 16 gebildeten Getriebe und der Antriebsrolle 7 ist ein weiteres Untersetzungsgetriebe angeordnet. Dieses ist hier als Planetenradgetriebe mit einem Sonnenrad 20, einem Hohlrad 22 und mehreren Planetenrädern 24 ausgeführt, die auf einem Planetenradträger 26 angeordnet sind.

Das Sonnenrad 20 ist fest mit dem Tellerrad 16 verbunden. Das Hohlrad 22 ist drehfest innerhalb des Gehäuses 28 des Rangierantriebs 5 angebracht. Der Planetenradträger 26 ist mit einer Antriebsrollenwelle 30 gekoppelt, auf der die Antriebsrolle 7 drehfest angeordnet ist.

Bei dem vom Ritzel 14 und dem Tellerrad 16 gebildeten Getriebe ist ein Hypoidgetriebe.

Das Untersetzungsverhältnis des Hypoidgetriebes kann in der Größenordnung von 8:1 bis 12:1 liegen.

Das Untersetzungsverhältnis des Planetenradgetriebes kann im selben Bereich liegen.

Um zu gewährleisten, dass sich der mit dem Rangierantrieb 5 versehene Anhänger nicht unbeabsichtigt in Bewegung setzt, wenn er auf einem geneigten, abfallenden Untergrund rangiert wird, ist die Verzahnung des Hypoidgetriebes selbsthemmend ausgelegt.

Bei der in Figur 2 gezeigten Ausführungsform ist das Ritzel 14 mittels zweier Wälzlager 50 im Gehäuse 28 einseitig gelagert. Anders ausgedrückt: Die Lager 50 befinden sich auf ein und derselben Seite des Ritzels, nämlich abgewandt von der Antriebsrollenwelle 30.

Insgesamt ergibt sich durch die Kombination des selbsthemmenden Hypoidgetriebes mit Ritzel 14 und Tellerrad 16 sowie des Planetengetriebes eine sehr kompakte Anordnung, die es ermöglicht, das Antriebsmoment des Elektromotors mit hohem Wirkungsgrad auf die Antriebsrolle 7 zu übertragen.

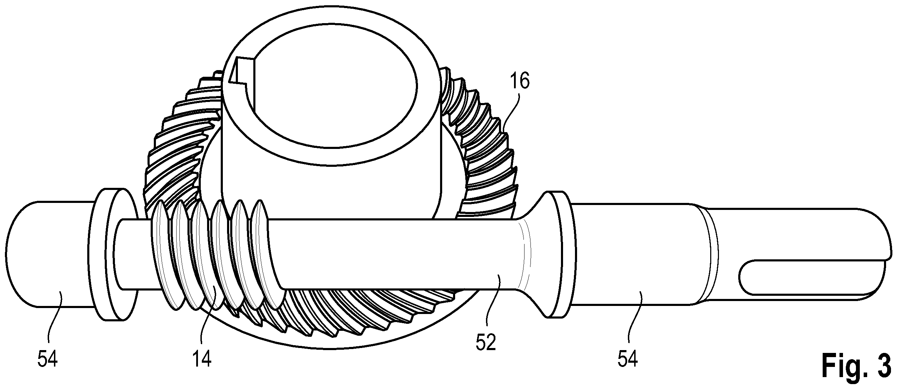

In Figur 3 ist eine Ausführungsvariante gezeigt, bei der das Ritzel 14 auf einer Ritzelwelle 52 angeordnet ist, die beiderseits des Ritzels 14 gelagert ist. Hierfür sind Lagerabschnitte 54 vorgesehen. Möglich ist dies, wenn der Versatz V so groß gewählt ist, dass die Ritzelwelle 52 nicht mit der Abtriebsseite des Tellerrades 16 kollidiert.

Geeignete Werte für das Untersetzungsverhältnis des Hypoidgetriebes liegen im Bereich von 12:1 bis 25:1. Aufgrund der Selbsthemmung des Getriebes ist es möglich, auf eine Motorbremse zu verzichten. Trotz der Selbsthemmung kann ein Wirkungsgrad in der Größenordnung von 80% erzielt werden.

Der Kegelwinkel α (siehe Figur 2a) kann bei einem solchen Getriebe sehr klein sein. Im Extremfall liegt er bei nahe 0 oder sogar bei 0. Entsprechend hat die Verzahnung des Ritzels 14 einen Kegelwinkel, der sehr nahe bei 0 liegt oder ebenfalls 0 ist.

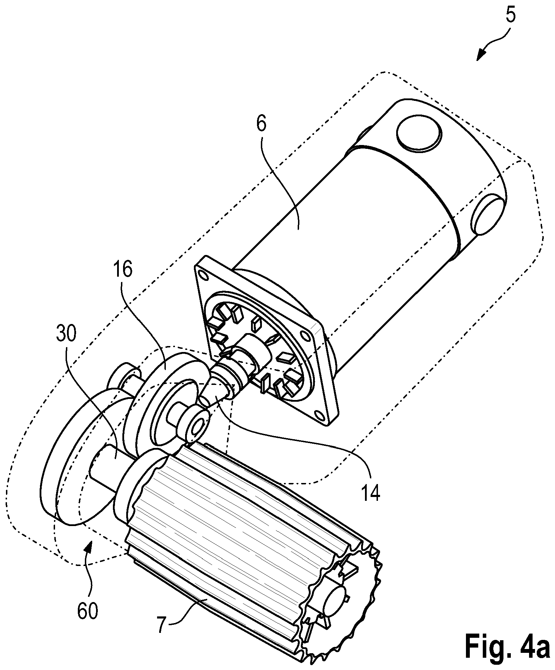

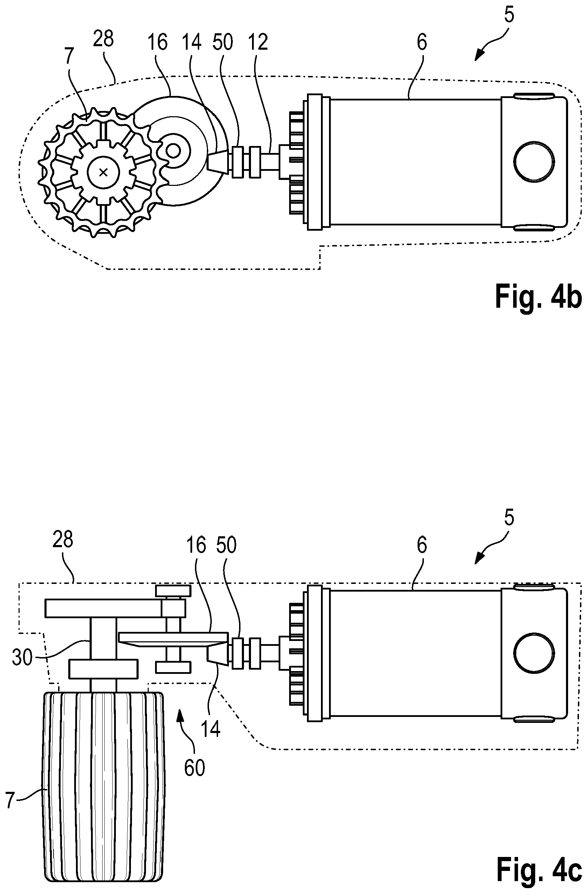

In Figur 4 ist eine zweite Ausführungsform gezeigt. Für die von der ersten Ausführungsform bekannten Bauteile werden dieselben Bezugszeichen verwendet, und es wird insoweit auf die obigen Erläuterungen verwiesen.

Der Unterschied zwischen der ersten und der zweiten Ausführungsform besteht darin, dass als zweites Untersetzungsgetriebe kein Planetenradgetriebe verwendet wird, sondern ein Stirnradgetriebe 60, welches hier einstufig ausgeführt ist.

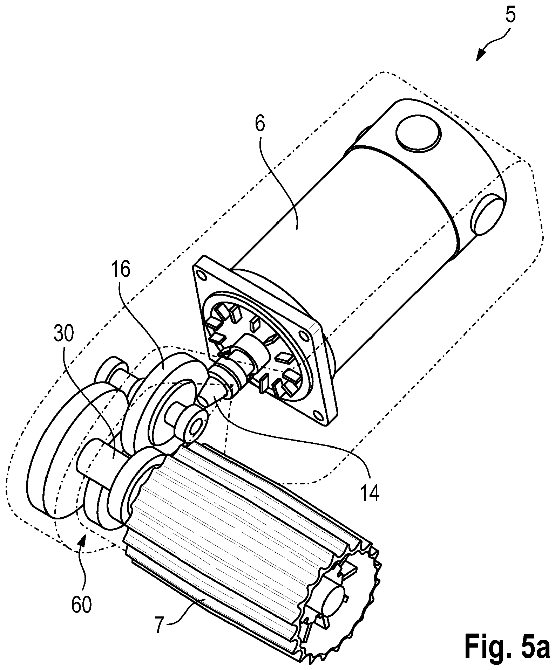

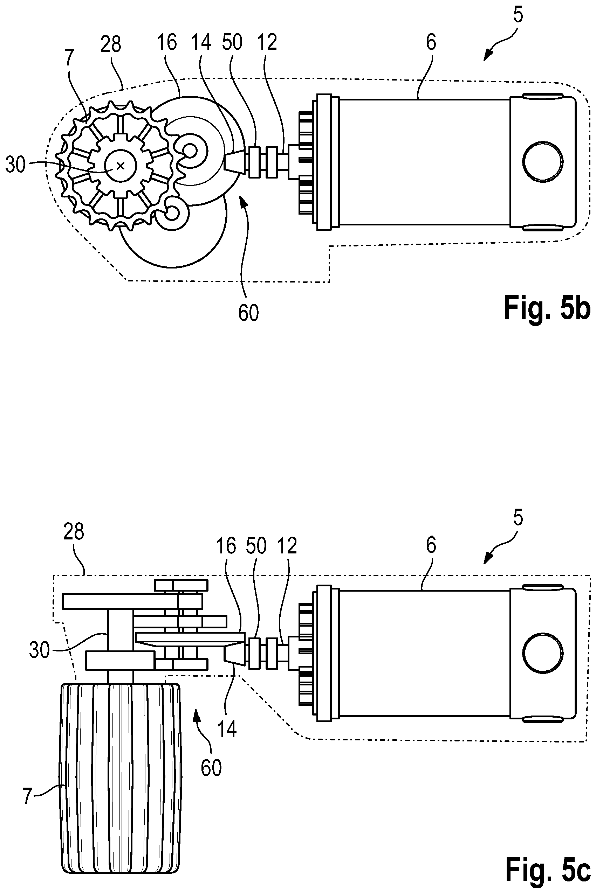

In Figur 5 ist eine dritte Ausführungsform gezeigt. Für die von den vorhergehenden Ausführungsformen bekannten Bauteile werden dieselben Bezugszeichen verwendet, und es wird insoweit auf die obigen Erläuterungen verwiesen.

Der Unterschied zwischen der zweiten und der dritten Ausführungsform besteht darin, dass bei der dritten Ausführungsform das zweite Untersetzungsgetriebe 60 zweistufig ausgeführt ist. In gleicher Weise wie bei der zweiten Ausführungsform ist das vom Ritzel 14 und dem Tellerrad 16 gebildete Getriebe ein selbsthemmendes Hypoidgetriebe.

## Patentansprüche

1. Rangierantrieb (5) für einen Anhänger (2), mit einem Elektromotor (6), einer Antriebsrolle (7) und einem Getriebe (14, 16), das den Elektromotor (6) mit der Antriebsrolle (7) koppelt, **dadurch gekennzeichnet, dass** das Getriebe ein selbsthemmendes Hypoidgetriebe ist.

2. Rangierantrieb (5) nach Anspruch 1, **dadurch gekennzeichnet, dass** das Getriebe ein Ritzel (14) und ein Tellerrad (16) aufweist und der Versatz (V) der Drehachse des Ritzels (14) relativ zur Drehachse des Tellerrades (16) in der Größenordnung von 20 bis 80% des Radius der Verzahnung des Tellerrades (16) beträgt.

3. Rangierantrieb (5) nach Anspruch 2, **dadurch gekennzeichnet, dass** eine Ritzelwelle (52) vorgesehen ist, auf der das Ritzel (14) angeordnet ist und die beiderseits des Ritzels (14) gelagert ist.

4. Rangierantrieb (5) nach Anspruch 2, **dadurch gekennzeichnet, dass** das Ritzel (14) einseitig gelagert ist.

5. Rangierantrieb (5) nach einem der vorhergehenden Ansprüche, **dadurch gekennzeichnet, dass** die Untersetzung des Hypoidgetriebes oberhalb von 8:1 beträgt.

6. Rangierantrieb (5) nach Anspruch 5, **dadurch gekennzeichnet, dass** die Untersetzung des Hypoidgetriebes oberhalb von 12:1 beträgt.

7. Rangierantrieb (5) nach Anspruch 5, **dadurch gekennzeichnet, dass** die Untersetzung des Hypoidgetriebes oberhalb von 16:1 beträgt.

8. Rangierantrieb (5) nach Anspruch 5, **dadurch gekennzeichnet, dass** die Untersetzung des Hypoidgetriebes oberhalb von 20:1 beträgt.

9. Rangierantrieb (5) nach einem der vorhergehenden Ansprüche, **dadurch gekennzeichnet, dass** ein weiteres Untersetzungsgetriebe (60) zwischen Elektromotor (6) und Antriebsrolle (7) vorhanden ist, die ein Untersetzungsverhältnis im Bereich von 5:1 bis 25:1 hat.

10. Rangierantrieb (5) nach Anspruch 9, **dadurch gekennzeichnet, dass** das Untersetzungsgetriebe (60) einstufig ist.

11. Rangierantrieb (5) nach Anspruch 9, **dadurch gekennzeichnet, dass** das Untersetzungsgetriebe (60) mehrstufig ist.

12. Rangierantrieb (5) nach einem der Ansprüche 9 bis 11, **dadurch gekennzeichnet, dass** das Untersetzungsgetriebe (60) ein Stirnradgetriebe ist.

13. Rangierantrieb (5) nach einem der Ansprüche 9 bis 11, **dadurch gekennzeichnet, dass** das Untersetzungsgetriebe (60) ein Planetenradgetriebe ist.

14. Rangierantrieb (5) nach Anspruch 13, **dadurch gekennzeichnet, dass** das Sonnenrad (20) des Planetenradgetriebes mit dem Tellerrad (16) des Hypoidgetriebes gekoppelt ist, das Hohlrad (22) feststehend ist und der Planetenradträger (26) mit einer Antriebsrollenwelle (30) gekoppelt ist.

15. Rangierantrieb (5) nach einem der vorhergehenden Ansprüche, **dadurch gekennzeichnet, dass** ein Anstellmechanismus vorhanden ist, mit dem die Antriebsrolle (7) gegen eine Lauffläche eines Rades (4) des Anhängers (2) gedrückt werden kann.

## Claims

1. Manoeuvring drive (5) for a trailer (2), said manoeuvring drive having an electric motor (6), a drive roller (7) and a gearbox (14, 16) that couples the electric motor (6) to the drive roller (7), **characterised in that** the gearbox is a self-locking hypoid gearbox.

2. Manoeuvring drive (5) according to claim 1,
**characterised in that** the transmission comprises a pinion (14) and a crown gear (16) and the offset (V) of the axis of rotation of the pinion (14) relative to the axis of rotation of the crown gear (16) is in the order of magnitude of 20 to 80% of the radius of the toothing of the crown gear (16).

3. Manoeuvring drive (5) according to claim 2, **characterised in that** a pinion shaft (52) is provided and is mounted on the two sides of the pinion (14) and the pinion (14) is arranged on said pinion shaft.

4. Manoeuvring drive (5) according to claim 2, **characterised in that** the pinion (14) is mounted on one side.

5. Manoeuvring drive (5) according to any one of the preceding claims, **characterised in that** the gear reduction of the hypoid gearbox is above 8:1.

6. Manoeuvring drive (5) according to claim 5, **characterised in that** the gear reduction of the hypoid gearbox is above 12:1.

7. Manoeuvring drive (5) according to claim 5, **characterised in that** the gear reduction of the hypoid gearbox is above 16:1.

8. Manoeuvring drive (5) according to claim 5, **characterised in that** the gear reduction of the hypoid gearbox is above 20:1.

9. Manoeuvring drive (5) according to any one of the claims, **characterised in that** a further reduction gear (60) is present between the electric motor (6) and the drive roller (7), said gear reduction having a gear reduction ratio in the range of 5:1 to 25:1.

10. Manoeuvring drive (5) according to claim 9, **characterised in that** the reduction gear (60) is single stage.

11. Manoeuvring drive (5) according to claim 9, **characterised in that** the reduction gear (60) is multistage

12. Manoeuvring drive (5) according to any one of the claims 9 to 11, **characterised in that** the reduction gear (60) is a spur gear.

13. Manoeuvring drive (5) according to any one of the claims 9 to 11, **characterised in that** the reduction gear (60) is a planetary gear.

14. Manoeuvring drive (5) according to claim 13, **characterised in that** the sun gear (20) of the planetary gear is coupled to the crown gear (16) of the hypoid gearbox, the ring gear (22) is fixed and the planetary gear carrier (26) is coupled to a drive roller shaft (30).

15. Manoeuvring drive (5) according to any one of the preceding claims, **characterised in that** an adjustment mechanism is provided and it is possible using said adjustment mechanism to press the drive roller (7) against a running surface of a wheel (4) of the trailer (2).

## Revendications

1. Entraînement de manoeuvre (5) pour remorque (2), comprenant un moteur électrique (6), un rouleau d'entraînement (7) et un engrenage (14, 16) couplant le moteur électrique (6) au rouleau d'entraînement (7), **caractérisé en ce que** l'engrenage est un engrenage hypoïde à blocage automatique.

2. Entraînement de manoeuvre (5) selon la revendication 1, **caractérisé en ce que** l'engrenage présente un pignon (14) et une couronne dentée (16), et **en ce que** le décalage (V) de l'axe de rotation du pignon (14) par rapport à l'axe de rotation de la couronne dentée (16) est de l'ordre de grandeur de 20 à 80% du rayon de la denture de la couronne dentée (16).

3. Entraînement de manoeuvre (5) selon la revendication 2, **caractérisé en ce qu'**il est prévu un arbre de pignon (52) sur lequel le pignon (14) est agencé et qui est monté de part et d'autre du pignon (14).

4. Entraînement de manoeuvre (5) selon la revendication 2, **caractérisé en ce que** le pignon (14) est monté de manière unilatérale.

5. Entraînement de manoeuvre (5) selon l'une des revendications précédentes, **caractérisé en ce que** la démultiplication de l'engrenage hypoïde est supérieure à 8:1.

6. Entraînement de manoeuvre (5) selon la revendication 5, **caractérisé en ce que** la démultiplication de l'engrenage hypoïde est supérieure à 12:1.

7. Entraînement de manoeuvre (5) selon la revendication 5, **caractérisé en ce que** la démultiplication de l'engrenage hypoïde est supérieure à 16:1.

8. Entraînement de manoeuvre (5) selon la revendication 5, **caractérisé en ce que** la démultiplication de l'engrenage hypoïde est supérieure à 20:1.

9. Entraînement de manoeuvre (5) selon l'une des revendications précédentes, **caractérisé en ce qu'**un démultiplicateur additionnel (60) qui présente un rapport de démultiplication dans une plage de 5:1 à 25:1 est présent entre le moteur électrique (6) et le rouleau d'entraînement (7).

10. Entraînement de manoeuvre (5) selon la revendication 9, **caractérisé en ce que** le démultiplicateur (60) est à un étage.

11. Entraînement de manoeuvre (5) selon la revendication 9, **caractérisé en ce que** le démultiplicateur (60) est à plusieurs étages.

12. Entraînement de manoeuvre (5) selon l'une des revendications 9 à 11, **caractérisé en ce que** le démultiplicateur (60) est un engrenage droit.

13. Entraînement de manoeuvre (5) selon l'une des revendications 9 à 11, **caractérisé en ce que** le démultiplicateur (60) est un engrenage planétaire.

14. Entraînement de manoeuvre (5) selon la revendication 13, **caractérisé en ce que** la roue solaire (20) de l'engrenage planétaire est couplée à la roue dentée (16) de l'engrenage hypoïde, **en ce que** la couronne de train planétaire (22) est stationnaire, et **en ce que** le porte-satellites (26) est couplé à un arbre de rouleau d'entraînement (30).

15. Entraînement de manoeuvre (5) selon l'une des revendications précédentes, **caractérisé en ce qu'**un mécanisme de serrage est présent, au moyen duquel le rouleau d'entraînement (7) peut être poussé contre une surface de roulement d'une roue (4) de la remorque (2).
